# EUROPÄISCHE PATENTANMELDUNG

(11) **EP 4 699 695 A1**
(43) Veröffentlichungstag der Anmeldung: **25.02.2026**
(21) Anmeldenummer: 24196029.3
(22) Anmeldetag: 22.08.2024
(51) Int. Cl.: B01L 3/00, G01N 21/03

(54) **KÜVETTE ZUR ANALYSE EINES FLUIDS**

(71) Anmelder: Hombrechtikon Systems Engineering AG, 8634 Hombrechtikon (CH)
(72) Erfinder: LUTZE, Konstantin, 8713 Uerikon (CH); QUINTEL, Harald, 8266 Steckborn (CH)
(74) Vertreter: IPS Irsch AG

(57) **Zusammenfassung**

Die Erfindung betrifft eine Küvette (1) zur Analyse eines Fluids, umfassend einen Innenraum (2) zur Aufnahme des Fluids, wobei der Innenraum (2) einen Analyseabschnitt (3) zur Analyse des Fluids umfasst. Der Analyseabschnitt (3) erstreckt sich dabei über zwei sich gegenüberliegenden Seiten (4, 5) der Küvette (1). Die Küvette (1) umfasst zudem eine erste Öffnung (6) zum Befüllen der Küvette (1), wobei das Fluid über die erste Öffnung (6) in den Innenraum (2) einbringbar ist, und der Analyseabschnitt (3) über eine erste Analysestrecke (7) zur Analyse des Fluides und eine zweite Analysestrecke (8) zur Analyse des Fluids verfügt, wobei die erste Analysestrecke (7) derart kürzer ist als die zweite Analysestrecke (8), dass mittels der ersten Analysestrecke (7) und der zweiten Analysestrecke (8) unterschiedlich konzentrierte Fluide analysiert werden können. Die erste Analysestrecke (7) und die zweite Analysestrecke (8) erstrecken sich von einer ersten Seite (4) der sich gegenüberliegenden Seiten (4, 5) der Küvette (1) zu einer zweiten Seite (5) der sich gegenüberliegenden Seiten (4, 5) der Küvette (1).

## Beschreibung

Die Erfindung betrifft eine Küvette zur Analyse von Fluiden, ein Verfahren zur Analyse von Fluiden und eine Pipettiervorrichtung mit einer Küvette zur Analyse von Fluiden sowie einen Pipettierautomaten gemäss dem Oberbegriff der unabhängigen Ansprüche.

Im Stand der Technik werden Küvetten meist dazu verwendet, kleine Probenmengen zu analysieren.

Küvetten bilden dabei einen Behälter mit planparallelen Wänden, in dem eine Reaktion und/ oder ein Ergebnis einer Reaktion photometrisch überwacht oder gemessen wird.

Standardküvetten haben einen quadratischen Querschnitt mit Aussenabmessungen von 12,5 × 12,5 mm. Absorptionsphotometer haben einen Schacht mit entsprechendem Querschnitt, in den die Küvetten einsetzbar sind. Quer durch diesen Küvettenschacht verläuft der Strahlengang der Beleuchtungseinrichtung.

Das Mass der Abschwächung des Strahlengangs beim Durchgang durch die beispielsweise mit Farbstoffen versetzte Probe (die Abschwächung durch das Glas der Küvette selbst wird als Konstante berücksichtigt) bezeichnet die Lichtabsorption der Probe, sodass über diese eine Aussage gemacht werden kann.

Da die bearbeiteten Proben meist nur ein geringes Volumen auffassen, werden im Stand der Technik Pipetten zum Dosieren von Proben/Flüssigkeiten verwendet. Meist werden Pipetten dabei im medizinischen Bereich verwendet, wobei Pipettenspitzen als Wegwerfartikel aus Kunststoff verwendet werden, um Kontaminationen zu vermeiden. Für kleine Volumina werden sogenannte Mikropipetten verwendet, wobei kleine Volumina von ungefähr 100 Nanolitern und mehr pipettiert werden können. Für repetitive Arbeiten gibt es elektronisch gesteuerte Pipetten, welche insbesondere auch bei Laborautomaten und - robotern Anwendung finden.

Manche Pipetten arbeiten nach dem Verdrängungsprinzip, wobei ein beweglicher Kolben Luft verdrängt, beziehungsweise heranzieht, wodurch eine Flüssigkeit aus der beziehungsweise in die Pipettenspitze gelangt.

Alternativ zum Verdrängerprinzip gibt es im Stand der Technik Pipetten, welche nach dem Luftpolsterprinzip arbeiten. Eine entsprechende Pipettiervorrichtung ist zum Beispiel aus der DE10237770A1 bekannt. Hierbei trennt eine Luftsäule, die in der Pipettenspitze aufgesaugte Flüssigkeit und einen Innenraum der Pipette. Durch die Bewegung eines Pumpelements der Pumpe entsteht ein Unterdruck in der Pipettenspitze, der das Aufsteigen der Flüssigkeit in die Spitze bewirkt. Die durch das Pumpelement bewegte Luftsäule sorgt für einen Fluidstrom, aufgrund dessen die Bewegung der Flüssigkeit in die beziehungsweise aus der Pipettenspitze erfolgt.

Weiter sind im Stand der Technik Vorrichtungen bekannt, welche ausschliesslich zur Abgabe von Flüssigkeiten verwendet werden. Im Gegensatz zu Pipetten verfügen diese Vorrichtungen in der Regel über ein Reservoir, aus welchem die Flüssigkeit abgegeben wird. Dabei wird ein bestimmtes Volumen repetitiv aus dem Reservoir abgegeben. Eine entsprechende Flüssigkeitsabgabevorrichtung ist aus der US 7,303,728 B2 bekannt. Ausserdem ist aus der WO 2006005923 A1 ein Flüssigkeitsabgabesystem zur Abgabe von Flüssigkeitsvolumina im Submikroliterbereich bekannt.

Die in die Pipette aufgenommene Flüssigkeit wird dann in ein Gefäss abgegeben, um sie dort zu analysieren, beispielsweise in eine Küvette.

Die Küvetten aus dem Stand der Technik verfügen dabei über ein Fenster, durch welches die Flüssigkeit oder Probe im Innenraum der Küvette analysiert werden kann.

Ebenfalls aus dem Stand der Technik bekannt sind Küvetten, die über unterschiedlich lange Analysestrecken zur Analyse von Proben verfügen. Dies hat den Vorteil, dass in einer Küvette Proben von unterschiedlicher Dichte, beziehungsweise Konzentration analysiert werden können, je nachdem, welche Analysestrecke genutzt wird. Eine entsprechende Küvette ist in der DE 198 26 470 C2 gezeigt. Der Nachteil aus den im Stand der Technik beschriebenen Küvetten mit unterschiedlichen Analysestrecken besteht darin, dass sich die Analysetrecken in der Küvette kreuzen. Eine gleicheizeitige Analyse durch beide Strecken ist daher nicht möglich, da die Küvette zum Wechsel der Strecke um 90° gedreht werden muss. Dieser Wechsel ist nicht nur zeitaufwändig und unterbricht den Arbeitsfluss, sondern birgt auch die Gefahr der Kontamination oder gar des Verschüttens.

Dies ist jedoch etwas, was im Laboralltag im Hinblick auf die Gesundheit der Arbeitskräfte vor Ort und die meist kosten- und zeitintensive Herstellung oder Beschaffung der Proben vermieden werden soll.

Bei einer gleichzeitigen Analyse mittels zweier sich kreuzender Analysestrecken besteht zudem die Gefahr, verfälschte Ergebnisse zu erhalten, weil z.B. die Messvorgänge sich im Kreuzungsbereich gegenseitig beeinflussen.

Die Aufgabe der vorliegenden Erfindung ist es also eine Vorrichtung für die Messung und / oder die Analyse von Fluiden bereitzustellen, die die aus dem Stand der Technik bekannten Nachteile beseitigt; insbesondere eine Küvette für die Messung und / oder Analyse eines Fluids so zu verbessern, dass die Messung und / oder Analyse sicherer, schneller, kostengünstiger und effizienter erfolgt und die Fehlerrate gleichzeitig reduziert wird.

Diese Aufgabe wir erfindungsgemäss durch eine Küvette zur Analyse eines Fluids, ein Verfahren zur Analyse von Fluiden, eine Pipettiervorrichtung sowie einen Pipettierautomaten mit den Merkmalen der unabhängigen Ansprüche gelöst.

Die abhängigen Ansprüche beziehen sich auf besonders vorteilhafte Ausführungsformen der Erfindung.

Erfindungsgemäss wird eine Küvette zur Analyse eines Fluids vorgeschlagen. Hierbei umfasst die Küvette einen Innenraum zur Aufnahme des Fluids, wobei der Innenraum einen Analyseabschnitt zur Analyse des Fluids umfasst, und der Analyseabschnitt sich über zwei sich gegenüberliegende Seiten der Küvette erstreckt. Die Küvette umfasst dabei eine erste Öffnung zum Befüllen der Küvette, wobei das Fluid über die Öffnung in den Innenraum einbringbar ist. Der Analyseabschnitt der Küvette verfügt über eine erste Analysestrecke zur Analyse des Fluids und eine zweite Analysestrecke zur Analyse des Fluids. Die erste Analysestrecke ist dabei derart kürzer als die zweite Analysestrecke, sodass mittels der ersten Analysestrecke und der zweiten Analysestrecke unterschiedlich konzentrierte Fluide analysiert werden können, wobei die erste Analysestrecke und die zweite Analysestrecke sich von einer ersten Seite, der sich gegenüberliegenden Seiten der Küvette zu einer zweiten Seite, der sich gegenüberliegenden Seiten der Küvette erstrecken.

So ist es möglich im Innenraum entlang des Analyseabschnitts eine Fluidsäule aufzubauen, die in ihrer Dicke entsprechend der Länge der Analysestrecken variiert. Die unterschiedliche Dicke der Säule ermöglicht es, Fluide mit unterschiedlichen Konzentrationen oder unterschiedlicher Dichte zu untersuchen. So könnte beispielweise ein optisch dichtes Fluid mittels Photometrie entlang der kurzen, ersten Analysestrecke analysiert werden, während ein optisch wenig dichtes Fluid entlang der langen, zweiten Analysestrecke analysiert werden kann.

Dies kann dabei von einem Analyseapparat vorgenommen werden. Ein Analyseapparat ist dabei bevorzugt eine Vorrichtung, die mindestens einen Parameter beziehungsweise Messwert über das Fluids ermitteln kann, wobei er über einen Sensor verfügt, der den entsprechenden Parameter und dessen Verlauf über die Zeit messen kann. Bevorzugt verfügt der Analyseapparat auch über einen Emitter, der alle notwendigen Signale, insbesondere Strahlung, aussenden kann, die für die Analyse des Sensors notwendig sind. Diese Kombination aus Emitter und Sensor wird im Rahmen dieser Anmeldung als Analyseeinheit bezeichnet, welche insbesondere Teil des Analyseapparats sein kann.

Bei der Photometrie beispielsweise sendet der Emitter Licht in mindestens einer Bandbreite ab, sodass dieses durch das Fluid dringt und auf der anderen Seite des Fluids durch den Sensor detektiert werden kann. Durch die Differenz aus emittiertem Licht und detektierten Licht lässt sich so eine Aussage über die optische Dichte des Fluids treffen. Für die Berechnung dieser Daten kann ein Rechenmodul verwendet werden, welches sowohl von dem Analyseapparats umfasst als auch ein externes Teil sein kann. Es versteht sich dabei von selbst, dass auch andere Analyseverfahren als die Photometrie hierfür genutzt werden können, die dem Fachmann bekannt sind. Beispielsweise kann der Analyseapparat eine Strahlung aussenden, und die Veränderung, die diese Strahlung entlang der Analysetrecke erfährt, detektieren und so Rückschlüsse auf das Fluid in der Analysestrecke zulassen. Die Strahlung kann dabei beispielsweise polychromatische Röntgenstrahlung zur Röntgenfluoreszenzanalyse, Radiostrahlung, sichtbares Licht und / oder UV-VIS Strahlung sein. Ebenso ist es denkbar, dass mit einem ähnlichen Aufbau andere Parameter des Fluids entlang der Analysestrecke wie etwa Temperatur, Fluoreszenz oder die elektrische Leitfähigkeit überwacht und zur Analyse genutzt werden können.

Ebenfalls ist es denkbar, dass die Küvette neben der ersten Analysestrecke und der zweiten Analysestrecke noch über weitere Analysestrecken verfügt, welche insbesondere andere Längen aufweisen. Darüber hinaus ist es denkbar, dass mehrere Parameter entlang einer einzelnen Analysestrecke oder mehrerer Analysestrecken gleichzeitig erhoben werden. Dies kann dabei sowohl durch einen einzelnen Analyseapparat erfolgen, der alle Parameter erfassen kann oder aber auch durch eine Vielzahl von Analyseapparaten, die nur einen Parameter erheben. Die Verwendung von mehreren Analyseapparaten, zur Kontrolle der erhobenen Daten, ist ebenfalls denkbar.

Die Verwendung mehrerer Analysestrecken erlaubt es, gerade bei unbekannten Substanzen eine möglichst optimale Analyse durchzuführen, weil auf diese Weise mehrere Datensätze für dasselbe Fluid vorliegen, die sich jedoch alle in einem Punkt, nämlich der Länge der Analysestrecke, auf der sie erhoben wurden, unterscheiden.

Dies hat ausserdem den Vorteil, dass mehrere Analysen in einem Arbeitsschritt vorgenommen werden können, da sonst für jede dieser Analysen eine eigene Küvette bereitgestellt werden müsste und jede Analyse in einem eigenen Schritt vorgenommen werden müsste.

So wird nicht nur Zeit gespart, indem die Analysen in einem Schritt durchgeführt werden können, sondern es wird auch Material gespart, weil weniger Küvetten für denselben Informationsgewinn benötigt werden. Ausserdem wird die Qualität der erhobenen Daten verbessert, weil weniger Umfüllschritte von Fluiden in die Küvette notwendig sind als aus dem Stand der Technik bekannt. Da Umfüllschritte immer auch Fehlerquellen in einer Analyse sein können, wird so sichergestellt, dass die Häufigkeit des Auftretens dieser Fehlerquelle reduziert wird.

In einem bevorzugten Ausführungsbeispiel kann die Küvette dabei über eine zweite Öffnung verfügen, die dergestalt am Probenraum angeordnet ist, dass der Innenraum einen Kanal bildet. Hierdurch ist es möglich, das Fluid, welches über die erste Öffnung in die Küvette einbringbar ist, über die zweite Öffnung wieder aus der Küvette abzulassen. Die zweite Öffnung kann ebenfalls dazu genutzt werden, das Fluid nach dem Ablassen wieder in die Küvette einzubringen. Die Küvette kann dabei als Pipettenspitze oder als ein Aufsatz für eine Pipettenspitze verwendet werden.

In einem bevorzugten Ausführungsbeispiel können die erste Analysestrecke und die zweite Analysestrecke auf einer Achse zwischen erster Öffnung und zweiter Öffnung dergestalt nebeneinander angeordnet sein, dass die erste Analysestrecke zwischen der ersten Öffnung und der zweiten Analysestrecke angeordnet ist und die zweite Analysestrecke zwischen der ersten Analysestrecke und der zweiten Öffnung angeordnet ist. Dies ist besonders deshalb vorteilhaft, weil es die Herstellung der Pipette mittels eines Spritzgussverfahrens vereinfacht, da die fertige Küvette so leichter aus der Gussform entfernt werden kann.

Eine solche erleichterte Entfernung ist dabei gleichbedeutend mit einer verringerten Fehlerquote bei der Produktion und somit kostengünstiger und ressourcensparend im Herstellungsprozess.

Es ist ebenfalls denkbar, dass die erste und die zweite Analysestrecke dergestalt nebeneinander angeordnet sind, dass sich beide auf einer orthogonal zur Achse stehenden Ebene befinden. Diese Anordnung soll im Rahmen dieser Anmeldung als "nebeneinander angeordnet" bezeichnet werden. Eine solche Anordnung bringt den Vorteil, dass die Küvette variabel in gängige Mess- und / oder Analyseapparaturen einsetzbar ist, wie sie dem Fachmann bekannt sind. So können erfindungsgemässe Küvetten entweder in einem Mess- und / oder Analyseapparat verwendet werden, der über zwei Analyseeinheiten zur Analyse eines Fluids verfügt. Auf diese Weise können verschiedene Parameter gleichzeitig erhoben werden und / oder die von einer Analyseeinheit erhobenen Parameter durch eine zweite und / oder Vielzahl von Analyseeinheiten validiert werden. Dies hat den Vorteil, dass die erhaltenen Messwerte verlässlicher sind.

In einem bevorzugten Ausführungsbeispiel kann die Küvette über einen Anschlussbereich verfügen, der an der ersten Öffnung angeordnet ist, sodass eine Pipettenspitze an der Küvette anbringbar ist. Dadurch wird es möglich, die Küvette besonders präzise mittels einer Pipette zu befüllen. Dies hat den Vorteil, dass das Fehlerrisiko beim Befüllen der Küvette minimiert wird. Einerseits kann so verhindert werden, dass teure Fluide beim Befüllen der Küvette verschüttet werden und so ein finanzieller Schaden entsteht, andererseits wird so auch die Sicherheit der Personen erhöht, die an dem Verfahren beteiligt sind.

Das Anbringen der Pipettenspitze an der Küvette kann dabei bevorzugt dichtend, z.B. in Form einer Fluidverbindung erfolgen. Dadurch wird nicht nur das Austreten von Fluid am Übergang zwischen Pipettenspitze und Küvette verhindert, sondern es ist auch möglich, dass das Fluid mittels der fluidverbundenen Pipettenspitze über die erste Öffnung aus der Küvette entfernt wird.

Zudem kann durch die Fluidverbindung zwischen der Küvette und der Pipettenspitze das Fluid in der Küvette auch über die zweite Öffnung der Küvette abgegeben werden, indem ein Druck am distalen (nicht-Spitzenende der Pipettenspitze) Ende der Pipettenspitze angelegt wird, der die Fluidsäule im Inneren der Küvette aus der zweiten Öffnung der Küvette drückt.

Zudem kann durch die Fluidverbindung zwischen der Küvette und der Pipettenspitze das Fluid in der Küvette auch über die zweite Öffnung der Küvette aufgenommen werden, indem ein Sog am distalen (nicht-Spitzenende der Pipettenspitze) Ende der Pipettenspitze angelegt wird, der ein Fluid durch die zweite Öffnung in das Innere der Küvette saugt.

In einem bevorzugten Ausführungsbeispiel kann eine der sich gegenüberliegenden Seiten der Küvette in dem Bereich des Analyseabschnitts, an dem sich die erste Analysestrecke zwischen den beiden gegenüberliegenden Seiten der Küvette erstreckt, verdickt sein.

Dieser Bereich des Analyseabschnitts ist der erste Abschnitt des Analyseabschnitts, der sich darin von dem nicht verdickten, zweiten Abschnitt des Analyseabschnitts unterscheidet.

Dies hat den Vorteil, dass durch die Verdickung einer der sich gegenüberliegenden Seiten im ersten Abschnitt des Analyseabschnitts, an welchem sich auch die erste Analysestrecke erstreckt, die Länge der ersten Analysestrecke linear zur zunehmenden Verdickung der Seite abnimmt. Dadurch, dass die erste Analysestrecke kürzer wird, kann sie dazu genutzt werden Fluide zu analysieren, die zu dicht oder stark konzentriert sind, um sie mittels einer längeren Analysestrecke zu analysieren.

Die Verdickung der Seite der Küvette kann dabei gestuft erfolgen, sodass sich mehrere Analysestrecken mit unterschiedlichen Längen im Analyseabschnitt erstrecken können.

Es ist zudem denkbar, dass beide der sich gegenüberliegenden Seiten der Küvette in dem Bereich des Analyseabschnitts verdickt sein können, sodass die Länge der mindestens ersten Analysestrecke so verändert werden kann.

Ebenso ist es denkbar, dass die Verdickung der sich gegenüberliegenden Seiten der Küvette in dem Bereich des Analyseabschnitts gestuft erfolgt, sodass sich mehrere Analysestrecken mit unterschiedlichen Längen im Analyseabschnitt erstrecken können.

Die Verwendung mehrerer Analysestrecken erlaubt es, gerade bei unbekannten Substanzen eine möglichst optimale Analyse durchzuführen, weil auf diese Weise mehrere Datensätze für dasselbe Fluid vorliegen, die sich jedoch alle in einem Punkt, nämlich der Länge der Analysestrecke, auf der sie erhoben wurden, unterscheiden.

In einem bevorzugten Ausführungsbeispiel der Küvette kann die erste Analysestrecke weniger als 0.9 mm lang sein und die zweite Analysestrecke zwischen 0.95 mm und 2 mm lang sein. Besonders bevorzugt kann die erste Analysestrecke weniger als 0.5 mm lang sein und die zweite Analysestrecke zwischen 0.9 mm und 1.75 mm lang sein, wobei die erste Analysestrecke besonders bevorzugt weniger als 0.2 mm lang sein kann und die zweite Analysestrecke besonders bevorzugt zwischen 0.9 mm und 1.5 mm lang sein kann In einem bevorzugten Ausführungsbeispiel kann der Analyseabschnitt mindestens an der ersten der sich gegenüberliegenden Seiten über mindestens ein Messfenster verfügen, wobei sich mindestens eine der ersten oder zweiten Analysestrecken von dem Messfenster zur zweiten Seite, der sich gegenüberliegenden Seiten der Küvette erstreckt, sodass das Fluid durch das Messfenster entlang der Analysestrecke analysiert werden kann. Darunter kann auch verstanden werden, dass ein Messwert des Fluids durch das Messfenster erhoben werden kann, sodass das Fluid entlang der Analysestrecke analysierbar ist. Es können auch separate Messfenster an den verschiedenen Analysestrecken angeordnet sein. Das Messfenster (oder auch die gesamte Küvette) kann dabei aus einem transparenten Kunststoff bestehen oder anderen dem Fachmann bekannten, optisch transparenten Materialien, die sich zum Einbau in eine Küvette eignen.

Im Rahmen der Erfindung bedeutet optisch transparent, dass das Messfenster (zumindest in einem Bereich des Messfensters) durchlässig für elektromagnetische Wellen / Strahlung ist, insbesondere für elektromagnetische Wellen / Strahlung im UV/Vis-Bereich und / oder NIR-Bereich beziehungsweise für die Primärstrahlung.

Insbesondere kann ein amorphes Polymer als transparenter Kunststoff verwendet werden. Die Küvette und insbesondere das Messfenster kann dabei ein Cycloolefin-Copolymer umfassen. Cycloolefin-Copolymere werden in der Regel durch metallocenkatalysierte Copolymerisation von Cycloolefinen mit Alk-1-enen gewonnen. Im Gegensatz zu teilkristallinen Polymeren wie Polyethylen und Polypropylen sind Cycloolefin-Copolymere amorph und damit optisch transparent. Durch die geringe Doppelbrechung und optisch Transparenz können die Cycloolefin-Copolymere besonders bevorzugt für die erfindungsgemässen optische Analysen (durch den Analyseapparat) verwendet werden.

Dies hat den Vorteil, dass der Einfluss des Küvettenkörpers auf die Analyse des Fluids reduzieren lässt, sodass dieses aus dem Stand der Technik bekanntes Problem gelöst werden kann.

Ebenso kann die Küvette und / oder das Messfenster aus Glas hergestellt sein. Glas hat gegenüber Kunststoffen den Vorteil, dass es weniger anfällig für farbliche Veränderungen ist, die beispielsweise durch lange Lagerungszeiten oder einfallende Strahlung wie etwa UV-Strahlung hervorgerufen werden. Zudem ist Glas weniger anfällig für Kratzer als die meisten Kunststoffe. Beides, die Farbechtheit und die Kratzerresistenz können den Einfluss reduzieren, den die Küvette auf den Messvorgang hat.

Zudem kann das Messfenster als einfache Orientierungshilfe dienen, wenn es darum geht die Küvette dergestalt richtig in den Analyseapparat zu setzten, dass die Analyse entlang der Analysestrecke erfolgt und nicht etwa orthogonal zu dieser, wie es bei einem falschen Einsetzen der Küvette vorkommen kann.

Das falsche Einsetzen der Küvette ist eine bekannte Fehlerquelle bei der Arbeit mit Küvetten.

Gerade bei neuartigen Küvetten wie der in dieser Anmeldung beschriebenen, ist das Risiko des verkehrten Einsetzens gross. Mitarbeiter, die die neuen Küvetten benutzen, können durch Gewöhnung an frühere Küvetten diese neuen Küvetten genauso wie die alten einsetzen und bemerken ihren Fehler nicht. Das Messfenster kann deshalb beim Einsetzen der Küvette in den Analyseapparat eine einfache und schnell zu überprüfenden Hilfestellung sein, die diesen Fehler vermeidet.

In einem bevorzugten Ausführungsbeispiel kann der Analyseabschnitt von einer Wand umgeben sein, und die Wand über mindestens ein Messfenster zum Messen des Fluids im Innenraum verfügt. Die Wand erlaubt ein sicheres Abstellen der Küvette, da so die Kontaktfläche mit dem Boden vergrössert wird, was einerseits die Sicherheit erhöht, weil potenziell gesundheitsschädliche Fluide so weniger leicht durch ein Umstossen der Küvette entweichen können, andererseits werden hierdurch auch Kosten gespart, wenn das Risiko reduziert wird, dass teure oder langwierig produzierte Fluide verschüttet werden oder so ein Prozess, für den sie notwendig sind, von neuem gestartet werden muss. Darüber hinaus kann die Wand aus einem Material gefertigt sein, das den Innenraum, und damit das sich darin befindliche Fluid vor äusseren Einflüssen, wie z.B. Strahlung, schützt und somit die Qualität der Analyse erhöht, da etwa Interferenzen mit der Strahlung verhindert werden, welche zur Analyse genutzt wird. Das Material der Wand kann dabei selbstverständlich dergestalt gewählt werden, dass es vor mehr als nur einer Art von äusserem Einfluss schützt. Neben Strahlung könnenn diese Einflüsse insbesondere Temperatur, Fluoreszenz oder die elektrische Leitfähigkeit sein.

Das Messfenster erlaubt es hier, analog zu dem Messfenster der Küvette, eine Analyse des Küvetteninhalts vorzunehmen, und den Einfluss der den Küvetteninhalt umgebenden Wand auf die Analyse zu reduzieren.

In einem bevorzugten Ausführungsbeispiel kann die Wand der Küvette ein Paar einzelner sich gegenüberstehender Teilwände sein, insbesondere zwei Paare einzelner sich gegenüberstehende Teilwände sein. Dabei kann jede der einzelnen Teilwände aus einem Material gefertigt sein, das den Innenraum vor äusseren Einflüssen wie z.B. Strahlung schützt. Die Verwendung von unterschiedlichen Materialien für die einzelnen Teilwände ist ebenfalls denkbar.

Das eine Paar sich gegenüberstehende Teilwände oder beide Paare sich gegenüberstehende Teilwände erlauben ein sicherer Abstellen der Küvette, da so die Kontaktfläche mit dem Boden vergrössert wird, was einerseits die Sicherheit erhöht, weil potenziell gesundheitsschädliche Fluide so weniger leicht durch ein Umstossen der Küvette entweichen können, andererseits werden hierdurch auch Kosten gespart, wenn das Risiko reduziert wird, dass teure oder langwierig produzierte Fluide verschüttet werden oder ein Prozess, für den sie notwendig sind, von neuem gestartet werden muss.

In einem bevorzugten Ausführungsbeispiel kann die Küvette über einen konisch zulaufenden Innenraum verfügen. Dies hat den Vorteil, dass die Pipettenspitze geführt in die Küvette einführbar ist und dort sicherer hält. Hierdurch wird die Sicherheit erhöht, weil das Risiko reduziert wird, dass ein Fehler beim Einführen der Pipettenspitze in die Küvette auftritt. Gleichzeitig wird auch das Risiko reduziert, dass die Küvette frühzeitig von der Pipettenspitze rutscht und so potenziell gesundheitsgefährdendes und teures Fluid nach aussen tritt. Zudem wird die Arbeitsgeschwindigkeit erhöht, da ein einfaches Einführen und ein sicherer Sitz es ermöglichen, die Arbeitsschritte schneller durchzuführen.

Es ist dabei denkbar, dass der Innenraum bevorzugt entlang des Analyseabschnitts konisch zuläuft.

Es ist ebenfalls denkbar, dass der Innenraum der Küvetten dergestalt gefertigt wird, dass die Pipettenspitze durch Klemmkraft im Innenraum Halt findet. Denkbar wäre dies zum Beispiel mittels eines «Press-Fit», bei dem gleichzeitig eine dichtender Fluidverbindung zwischen der Küvette und der Pipettenspitze hergestellt werden kann

In einem bevorzugten Ausführungsbeispiel der Küvette kann der Innenraum gestuft sein, insbesondere entlang des Analyseabschnitts gestuft ist.

Der gestufte Innenraum hat den Vorteil, dass die Sicherheit erhöht wird, weil der Sitz der Pipettenspitze in der Küvette verbessert wird.

Zudem ermöglicht es der gestufte Analyseabschnitt klar definierte Analysestrecken bereitzustellen, wobei jede Stufe eine Analysestrecke mit unterschiedlicher Länge ermöglicht, ohne dabei eine der sich gegenüberliegenden Seiten verdicken zu müssen. Dadurch werden Material, Produktionszeit und somit Kosten gespart.

Ausserdem wird ein erfindungsgemässes Verfahren zur Analyse des Inhalts einer erfindungsgemässen Küvette vorgeschlagen, welches die folgenden Schritte umfasst: Bereitstellen der Küvette, Befüllen der Küvette über die erste Öffnung mit dem Fluid, Analyse des Fluids im Analyseabschnitt entlang der ersten und / oder der zweiten Analysestrecke.

Bei diesem Verfahren wird der Analyseapparat genutzt, um sowohl entlang der ersten Analysestrecke, als auch entlang der zweiten Analysestrecke Informationen über das sich in der Küvette befindende Fluid zu erhalten. Hierfür wird durch den Emitter des Analyseapparates ein Signal ausgesendet, welches das Fluid entlang der ersten und der zweiten Analysestrecke durchläuft und auf der anderen Seite der jeweiligen Analysestrecke von einem Sensor aufgenommen wird. Durch die Veränderung des Signals lassen sich so Rückschlüsse auf die Eigenschaften des Fluids ziehen.

Die Analyse entlang der ersten und der zweiten Analysestrecke dient dabei unterschiedlichen Zwecken. Dichte und / oder hoch konzentrierte Fluide können bevorzugt entlang der ersten Analysestrecke analysiert werden. Weniger dichte und / oder hoch konzentrierte Fluide können dagegen bevorzugt entlang der zweiten, längeren Analysestrecke analysiert werden, sodass gewährleistet ist, dass möglichst optimale Messvoraussetzungen gegeben sind und so möglichst optimale Messergebnisse erreicht werden. Auch die Verwendung von mehr als zwei Analysestrecken unterschiedlicher Länge ist denkbar, um diese Vorteile noch stärker nutzen zu können.

Der bzw. die in einem solchen Verfahren verwendeten Analyseapparate können dabei mehr als einen Emitter und Sensor, oder auch Analyseeinheit, umfassen, wobei es denkbar ist, dass jede dieser Analyseeinheiten einen anderen Messparameter erhebt. Es ist aber auch denkbar, dass jede der Analyseeinheiten den gleichen Parameter misst, um die Verlässlichkeit der Messung zu erhöhen. Ebenfalls ist es denkbar, dass alle erhobenen Messwerte eines Parameters gemittelt werden, um so einen verlässlichen Wert für den untersuchten Parameter zu erhalten.

In einem erfindungsgemässen Verfahren zur Analyse, kann die Küvette nach der Analyse wieder entleert werden. Das hat den Vorteil, dass keine potenziell gefährlichen oder gesundheitsgefährdenden Fluide in der Küvette verbleiben.

In einem erfindungsgemässen Verfahren kann die Küvette über eine zweite Öffnung verfügen und nach der Analyse über die zweite Öffnung geleert werden. Das hat den Vorteil, dass keine potenziell gefährlichen oder gesundheitsgefährdenden Fluide in der Küvette verbleiben.

Dabei ist es auch möglich, dass über die zweite Öffnung weitere Fluide in die Küvette aufgenommen werden. So zum Beispiel etwa während der laufenden Analyse eine Waschlösung, sodass weitere Arbeitsschritte in der Küvette möglich sind, ohne Gefahr zu laufen, dass der Inhalt der Küvette kontaminiert wird, weil ein Umfüllen notwendig wäre.

Zudem kann auf diese Weise nach der Analyse eine Reinigungslösung aufgenommen werden, sodass die Küvette gereinigt wird, und nach der Abgabe der Reinigungslösung aus der Küvette erneut verwendet werden kann, sodass Ressourcen gespart werden können.

Weiterhin wird eine erfindungsgemässe Pipettiervorrichtung zur Dosierung einer Flüssigkeit mittels eines Fluidstromes vorgeschlagen, wobei die Pipettiervorrichtung ein Mittel zum Befüllen und Entleeren einer an der Pipettiervorrichtung angebrachten Küvette durch den Fluidstrom umfasst, wobei die Küvette mit dem Mittel zum Befüllen und Entleeren strömungsverbunden ist. Das Mittel zum Befüllen kann dabei zum Beispiel ein Pipettenkolben sein. Dieser kann manuell oder automatisch betrieben werden. Selbstverständlich sind auch andere Mittel denkbar, die dazu geeignet sind, einen Fluidstrom zu erzeugen.

In einem Ausführungsbeispiel einer erfindungsgemässen Pipettiervorrichtung kann das Mittel zum Befüllen und Entleeren eine Vorrichtung zur Erzeugung oder Veränderung eines Drucks, insbesondere eine Pumpe mit einer Pumpkammer zur Erzeugung eines Fluidstromes sein. Eine solche Pumpe hat unter anderem den Vorteil, dass das Volumen des Fluidstroms exakt bestimmt, kontrolliert und eingestellt werden kann

In einem Ausführungsbeispiel einer erfindungsgemässen Pipettiervorrichtung umfasst die Vorrichtung eine Vielzahl von Küvetten. Dadurch ist es möglich parallel den Inhalt mehrere Küvetten zu analysieren. Hierdurch ergeben sich sowohl für die Automatisierung Vorteile als auch für ein paralleles Arbeiten. Insbesondere für ein paralleles Arbeiten mit gleichen Proben aber auch mit unterschiedlichen Proben.

Weiterhin wird ein erfindungsgemässer Pipettierautomat vorgeschlagen, umfassend eine erfindungsgemässe Pipettiervorrichtung, und eine Bewegungsvorrichtung zur Bewegung der Pipettiervorrichtung im Raum / Pipettierautomat. Zudem umfasst der Pipettierautomat einen Analyseapparat zur Durchführung der Analyse des Fluids in der Küvette. Eine erfindungsgemässe Pipettiervorrichtung kann mittels der Bewegungsvorrichtung in alle Raumrichtungen bewegt werden. Durch die Bewegungsvorrichtung ist es möglich die Pipettiervorrichtung exakt zu bewegen, und so die Qualität der Arbeit zu erhöhen, da die Pipettiervorrichtung nicht von Hand gehalten werden muss. Dies vermindert das Auftreten von Fehlern bei der Befüllung von Küvetten aufgrund von falscher oder schlechter Positionierung der Pipettenspitze gegenüber der Küvette. Zudem wird neben dieser Fehlerquelle auch das Gefahrenpotenzial für die Personen vor Ort reduziert, da ein Verschütten der Proben durch den Anwender vermieden wird.

In einem erfindungsgemässen Ausführungsbeispiel des Pipettierautomats kann der Pipettierautomat eine Vielzahl von Pipettiervorrichtungen umfassen. Dies hat den Vorteil, dass parallel gearbeitet werden kann und somit auch in dem Pipettierautomat die oben beschriebenen Vorteile der erhöhten Arbeitsqualität, Geschwindigkeit und Sicherheit genutzt werden können.

In einem weiteren erfindungsgemässen Ausführungsbeispiel des Pipettierautomats verfügt der Pipettierautomat über ein Steuermodul zur Steuerung der Bewegungsvorrichtung. Dieses Steuermodul erlaubt den ferngesteuerten sowie den automatisierten Betrieb der Pipettiervorrichtung. Hierdurch ergeben sich vor allem die bekannten Vorteile der Automatisierung. So kann die Fehlerquote reduziert werden, die gleichbleibende Qualität der Arbeit gewährleistet werden und gleichzeitig können Zeit und somit Kosten für Produktion und Personal gespart werden

In einem erfindungsgemässen Ausführungsbeispiel eines Pipettierautomats verfügt der Pipettierautomat und / oder die Pipettiervorrichtung über ein Sensormodul, dass dem Steuermodul Informationen zur automatisierten Steuerung der Bewegungsvorrichtung bereitstellen kann. Durch diese Informationen ist es möglich, die Position der einzelnen Komponenten des Pipettierautomats zueinander zu überprüfen und gegebenenfalls zu korrigieren, sodass sich die Fehlerrate beim Befüllen und / oder Entleeren reduzieren lässt. Zudem erlaubt die Verwendung eines Sensormoduls und die damit verbundene Überprüfung und Korrektur der Position der Teile des Pipettierautomats zueinander eine autonome Arbeitsweise. Dadurch werden personelle Ressourcen frei, da die Zeit, die für Steuerung und Überwachung des Pipettierautomats notwendig ist, reduziert werden kann. Zudem wird so auch die Sicherheit erhöht, da keine Personen beim Arbeiten in Kontakt mit den Substanzen kommen.

Die Übertragung der Informationen kann über eine Kabelverbindung oder kabellos erfolgen. Bei der kabellosen Informationsübertragung erfolgt die Daten- / Signalübertragung über freien Raum (Luft bzw. Vakuum) als Übertragungsmedium. Die Übertragung kann durch gerichtete oder ungerichtete elektromagnetische Wellen erfolgen. Bevorzugt wird dabei Bluetooth oder WLAN verwendet.

In einem erfindungsgemässer Pipettierautomat umfasst die Vorrichtung einen Vorratsbehälter für Küvetten. Dies erlaubt eine schnellere Verarbeitung, weil neue Küvetten direkt bereitgestellt werden können und somit schnell aufgenommen werden können. Darüber hinaus minimiert die Bereitstellung eines Vorratsbehälter mit Küvetten die Wahrscheinlichkeit einer Kontamination, da von aussen weniger häufig mit dem Pipettierautomaten interagiert werden muss.

Ebenso kann die Vorrichtung einen Vorratsbehälter für Pipettenspitzen umfassen, der dieselben Vorteile bietet, wie der Vorratsbehälter für Küvetten.

Um das Risiko der Kontamination noch weiter zu senken, kann der Pipettierautomat oder zumindest die Pipettiervorrichtung in einem Gehäuse angeordnet sein. Insbesondere umschliesst das Gehäuse den Pipettierautomaten oder die Pipettiervorrichtung dabei nach allen Richtungen, sodass das Gehäuses einen Behandlungsraum bildet, in dem unter einer hermetisch abgeriegelten Atmosphäre gearbeitet werden kann. Vorteilige Effekte werden jedoch auch bereits durch ein Gehäuse ohne eine hermetische Abriegelung erzielt. Zudem ist auch eine blosse Trennwand zur Reduktion von Zugluft oder eine Abdeckung denkbar, die um den Pipettierautomaten oder die Pipettiervorrichtung angeordnet werden können.

Ein Vorteil der erfindungsgemässen Küvette liegt insbesondere darin, dass bekannte Laborautomaten und Pipettiervorrichtungen einfach zu einem erfindungsgemässen Pipettierautomaten bzw. einer erfindungsgemässen Pipettiervorrichtung aufgerüstet werden können, da die bereits vorhandenen Küvetten durch die erfindungsgemässen Küvetten ausgetauscht werden können.

Auch das Nachrüsten eines Analyseapparates in bekannte Laborautomaten und Pipettiervorrichtungen ist denkbar und möglich.

Es versteht sich von selbst, dass die hier genannten Ausführungsbeispiele keinen beschränkenden Charakter haben und die verschiedenen Merkmale der Ausführungsbeispiele sowie die Ausführungsbeispiele selbst miteinander kombinierbar sind.

Im Folgenden wird die Erfindung anhand von Ausführungsbeispielen unter Bezugnahme auf die Zeichnungen näher erläutert. Die Zeichnungen zeigen:
Fig. 1: eine schematische Darstellung einer aus dem Stand der Technik bekannten Küvette;
Fig. 2: eine schematische Darstellung einer erfindungsgemässen Küvette zur Analyse eines Fluids;
Fig. 3: eine schematische Darstellung einer erfindungsgemässen Küvette mit Teilwänden;
Fig. 4: eine schematische Darstellung einer erfindungsgemässen Pipettiervorrichtung;
Fig. 5: eine schematische Darstellung eines erfindungsgemässen Pipettierautomaten angeordnet in einem Gehäuse

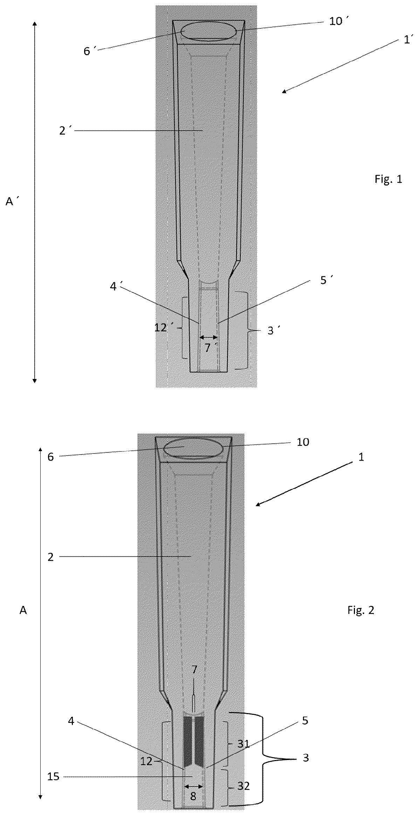

Zur Erläuterung eines bekannten Adapters für eine Pipette wird im Folgenden auf die Fig. 1 Bezug genommen, anhand derer der Stand der Technik näher beschrieben wird. Zur Unterscheidung des Standes der Technik von der vorliegenden Erfindung sind die Bezugszeichen, die sich auf Merkmale von bekannten Beispielen beziehen, mit einem Hochkomma versehen, während Merkmale erfindungsgemässer Ausführungsbeispiele mit Bezugszeichen versehen sind, die kein Hochkomma tragen.

Fig. 1 zeigt eine aus dem Stand der Technik bekannte Küvette 1', umfassend eine erste Öffnung 6' zum Befüllen eines Innenraums 2' und einen Anschlussbereich 10' zum Anschluss einer Pipettenspitze. Weiterhin umfasst die Küvette 1' einen Analyseabschnitt 3' der sich über eine erste sich gegenüberliegende Seite 4' und eine zweite sich gegenüberliegende Seite 5' erstreckt und ein Messfenster 12' zum Analysieren eines Fluids entlang einer ersten / einzigen Analysestrecke 7' umfasst.

Figur 2 zeigt eine schematische Darstellung einer erfindungsgemässen Küvette 1 zur Analyse eines Fluids, umfassend einen Innenraum 2 zur Aufnahme des Fluids, wobei der Innenraum 2 einen Analyseabschnitt 3 zur Analyse des Fluids umfasst, und der Analyseabschnitt 3 sich über zwei sich gegenüberliegenden Seiten 4 und 5 der Küvette 1 erstreckt und wobei die Küvette 1 über eine erste Öffnung 6 zum Befüllen der Küvette 1 verfügt, wobei das Fluid über die erste Öffnung in den Innenraum einbringbar ist, und der Analyseabschnitt 3 über eine erste Analysestrecke 7 zur Analyse des Fluides und eine zweite Analysestrecke 8 zur Analyse des Fluids verfügt. Die erste Analysestrecke 7 ist in einem ersten Abschnitt 31 des Analyseabschnitts 3 angeordnet und dabei derart kürzer als die zweite Analysestrecke 8, dass mittels der ersten Analysestrecke 7 und der zweiten Analysestrecke 8, die in einem zweiten Abschnitt 32 des Analyseabschnitts 3 angeordnet ist, unterschiedlich konzentrierte Fluide analysiert werden können. Die erste Analysestrecke 7 und die zweite Analysestrecke 8 erstrecken sich dabei von einer ersten Seite 4 der sich gegenüberliegenden Seiten 4 und 5 der Küvette 1 zu einer zweiten Seite 5 der sich gegenüberliegenden Seiten 4 und 5 der Küvette.

Durch eine zweite Öffnung 9 (hier nicht dargestellt) die am Probenraum 15 der Küvette 1 angeordnet ist, bildet der Innenraum 2 einen Kanal.

Die erste Analysestrecke 7 und die zweite Analysestrecke 8 sind auf einer Achse A zwischen der erster Öffnung 6 und zweiter Öffnung 9 (hier nicht dargestellt) dergestalt nebeneinander angeordnet, dass sich die erste Analysestrecke 7 zwischen der ersten Öffnung 6 und der zweiten Analysestrecke 8 befindet und die zweite Analysestrecke 8 sich zwischen der ersten Analysestrecke 6 und der zweiten Öffnung 9 (hier nicht dargestellt) befindet.

Die Küvette 1 verfügt an der ersten Öffnung 6 über einen Anschlussbereich 10, sodass eine Pipettenspitze (nicht gezeigt) an der Küvette 1 anbringbar ist.

Die in Figur 2 gezeigte Küvette 1 ist an den sich gegenüberliegenden Seiten 4 und 5 der Küvette 1 in dem ersten Abschnitt 31 des Analyseabschnitts 3 an dem sich die erste Analysestrecke 7 zwischen den beiden gegenüberliegenden Seiten 4 und 5 der Küvette 1 erstreckt, verdickt.

Die erste Analysestrecke 7 ist dabei weniger als 0.9 mm lang und die zweite Analysestrecke 8 ist zwischen 0.95 mm und 2 mm lang. Insbesondere ist die erste Analysestrecke 7 weniger als 0.5 mm lang und die zweite Analysestrecke 8 ist zwischen 0.9 mm und 1.75 mm lang, wobei die erste Analysestrecke 7 besonders bevorzugt weniger als 0.2 mm lang ist und die zweite Analysestrecke 8 besonders bevorzugt zwischen 0.9 mm und 1.5 mm lang ist.

Die in Figur 2 gezeigte Küvette 1 umfasst einen Analyseabschnitt, der an der ersten sich gegenüberliegenden Seite 4 der sich gegenüberliegenden Seiten 4 und 5 über ein Messfenster 12 verfügt. Die erste Analysestrecke 7 und die zweite Analysestrecke 8 erstrecken sich von dem Messfenster 12 zur zweiten Seite 5 der sich gegenüberliegenden Seiten 4 und 5 der Küvette 1, sodass das Fluid durch das Messfenster 12 entlang der ersten Analysestrecke 7 und der zweiten Analysestrecke 8 analysiert werden kann. Beziehungsweise ein Messwert des Fluids durch das Messfenster erhoben werden kann, sodass das Fluid entlang der Analysestrecke analysierbar ist.

Die Küvette 1 zeigt zudem einen konisch zulaufenden Innenraum 2, der bevorzugt entlang des Analyseabschnitts 3 konisch zuläuft.

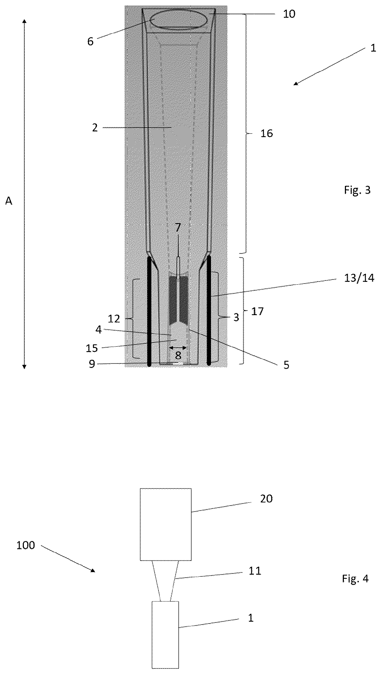

Figur 3 zeigt eine schematische Darstellung einer erfindungsgemässen Küvette 1, wobei die Küvette 1 über einen ersten Küvettenabschnitt 16 und über einen zweiten Küvettenabschnitt 17 verfügt. Am Übergang vom ersten 16 zum zweiten Küvettenabschnitt 17 ist mindestens eine Teilwand 14 angeordnet, die sich entlang des zweiten Küvettenabschnitts erstreckt und über mindestens ein Messfenster 12 zum Messen des Fluids im Innenraum verfügt.

Die in Figur 3 gezeigte Teilwand 14 der Küvette 1 kann dabei ein Paar einzelner sich gegenüberstehender Teilwände sein, insbesondere zwei Paare einzelner sich gegenüberstehende Teilwände. Die zwei Paare einzelner sich gegenüberstehender Teilwände 14 können dergestalt aneinander angeordnet sein, dass sie eine Wand 13 bilden, die den zweiten Küvettenabschnitt umgibt.

Die Küvette 1 aus der Figur 3 zeigt zudem einen gestuften Innenraum 2. Insbesondere entlang des Analyseabschnitts 3 ist der Innenraum gestuft, sodass sich eine erste Analysestrecke 7 und eine zweite Analysestrecke 8 ergeben.

Die gezeigte erfindungsgemässe Küvette 1 verfügt über eine erste Öffnung 6 über die die Küvette 1 befüllt werden kann. Beispielsweise kann sie mit einem Fluid befüllt werden. Im Analyseabschnitt 3 der Küvette 1 kann dieses Fluid entlang der ersten Analysestrecke 7 und / oder der zweiten Analysestrecke 8 analysiert werden.

Die Figur 3 zeigt zudem, dass die Küvette über eine zweite Öffnung 9 verfügt, über die das Fluid nach der Analyse aus der Küvette 1 abgegeben werden kann.

Figur 4 zeigt eine schematische Darstellung einer erfindungsgemässen Pipettiervorrichtung 100 zur Dosierung einer Flüssigkeit mittels eines Fluidstromes, wobei die Pipettiervorrichtung 100 eine erfindungsgemässe Küvette 1 umfasst. Die Küvette 1 ist dabei mit einem Mittel 20 zum Befüllen und Entleeren der Küvette 1 strömungsverbunden. Das Mittel 20 befüllt und entleert die Küvette 1 über einen Fluidstrom. Zwischen dem Mittel 20 und der Küvette 1 ist eine Pipettenspitze 11 angeordnet, die in die Küvette 1 eingeführt ist und die Strömungsverbindung zwischen Küvette 1 und Mittel 20 herstellt.

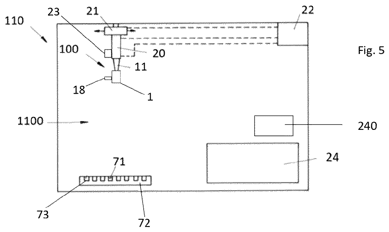

Fig. 5 zeigt eine schematische Darstellung eines erfindungsgemässen Pipettierautomaten 110, angeordnet in einem Gehäuse.

Der Pipettierautomat 110 umfasst einen Behandlungsraum 1100 zur Aufnahme einer Probe und eine erfindungsgemässe Pipettiervorrichtung 100 die zur Durchführung mindestens eines Bearbeitungsschrittes an einer Probe 71 in dem Behandlungsraum 1100 angeordnet ist. Zudem umfasst der Pipettierautomat 110 ein Probenmodul 72 in dem Probenbehälter 73 angeordnet sind.

Der Pipettierautomat 110 umfasst dabei eine Pipettiervorrichtung 100, und eine Bewegungsvorrichtung 21 zur Bewegung der Pipettiervorrichtung 100. Die Bewegungsvorrichtung 21 erlaubt die Bewegung der Pipettiervorrichtung 100 in alle Richtungen im Raum.

Eine erfindungsgemässe Küvette 1 kann mittels einer Pipettenspitze 11 auch an der Pipettiervorrichtung 100 befestigt werden und zudem nach dem Befestigen wieder von der Pipettenspitze 11 und damit der Pipettiervorrichtung 100 entfernt werden. Die Küvette 1 kann dabei nach der Entfernung von der Pipettiervorrichtung 100 ebenfalls aus dem Pipettierautomaten 110 entfernt werden.

Die Pipettiervorrichtung 100 zur Dosierung einer Flüssigkeit mittels eines Fluidstromes, kann dabei ein Mittel 20 zum Befüllen und Entleeren einer an der Pipettenspitze 11 angebrachten Küvette 1 durch den Fluidstrom umfassen, wobei die Pipettenspitze 11 mit dem Mittel 20 zum Befüllen und Entleeren strömungsverbunden ist.

Das Mittel 20 zum Befüllen und Entleeren einer Vorrichtung zur Erzeugung oder Veränderung eines Drucks, kann dabei insbesondere eine Pumpe mit einer Pumpkammer zur Erzeugung eines Fluidstromes sein.

Die Pipettiervorrichtung 100 umfasst eine Küvette 1, kann aber auch eine Vielzahl von Küvetten 1 umfassen.

Der Pipettierautomat 110 umfasst eine Pipettiervorrichtung 100, kann aber auch eine Vielzahl von Pipettiervorrichtungen 100 umfassen.

Der Pipettierautomat 110 verfügt dabei über ein Steuermodul 22 zur Steuerung der Bewegungsvorrichtung 21.

Es ist dabei möglich, dass der Pipettierautomat 110 und / oder die Pipettiervorrichtung 100 über ein Sensormodul 23 verfügt, das dem Steuermodul 22 Informationen zur automatisierten Steuerung der Bewegungsvorrichtung 21 bereitstellt.

Der Pipettierautomat 110 verfügt dabei über Vorratsbehälter 24 für Küvetten 1 und / oder Pipettenspitzen 11 sowie einen Entsorgungsbehälter 240 für Küvetten 1 und / oder Pipettenspitzen 11.

Der Pipettierautomat umfasst weiterhin einen Analyseapparat 18 zur Durchführung der Analyse des Fluids in der Küvette 1.

Durch die oben erläuterten Merkmale erlaubt es die vorliegende Erfindung daher zum ersten Mal, Fluide unterschiedlicher Dichten und Konzentrationen in derselben Küvette zu analysieren, ohne dabei einen Qualitätsunterschied zwischen den Analyseergebnissen der verschiedenen Fluide zu generieren und ohne die Anordnung der Küvette zwischen den Analysevorgängen ändern zu müssen.

Dadurch wird eine höhere Genauigkeit der Messdaten erreicht und gleichzeitig eine effizientere Arbeitsweise, da die Küvette nicht bewegt werden muss, um die Analysestrecke zu wechseln. Neben der Geschwindigkeitsersparnis, wird so auch die Sicherheit erhöht, weil ein Verschütten des Küvetteninhalts durch das Wegfallen des Bewegungsschrittes weniger wahrscheinlich ist. Ein Verringern der Verschüttungsgefahr ist zudem gleichbedeutend mit einem Kostenersparnis, da die wertvollen Fluide dadurch weniger häufig verloren gehen.

## Patentansprüche

1. Küvette zur Analyse eines Fluids, umfassend
einen Innenraum (2) zur Aufnahme des Fluids, wobei der Innenraum (2) einen Analyseabschnitt (3) zur Analyse des Fluids umfasst, und der Analyseabschnitt (3) sich über zwei sich gegenüberliegenden Seiten (4,5) der Küvette (1) erstreckt; und eine erste Öffnung (6) zum Befüllen der Küvette (1), wobei das Fluid über die erste Öffnung (6) in den Innenraum (2) einbringbar ist, und der Analyseabschnitt (3) über eine erste Analysestrecke (7) zur Analyse des Fluides und eine zweite Analysestrecke (8) zur Analyse des Fluids verfügt, wobei die erste Analysestrecke (7) derart kürzer ist als die zweite Analysestrecke (8), dass mittels der ersten Analysestrecke (7) und der zweiten Analysestrecke (8) unterschiedlich konzentrierte Fluide analysiert werden können,
**dadurch gekennzeichnet, dass** die erste Analysestrecke (7) und die zweite Analysestrecke (8) sich von einer ersten Seite (4) der sich gegenüberliegenden Seiten (4 und 5) der Küvette (1) zu einer zweiten Seite (5) der sich gegenüberliegenden Seiten der Küvette (1) erstrecken.

2. Küvette nach Anspruch 1, wobei eine zweite Öffnung (9) dergestalt am Probenraum (15) angeordnet ist, dass der Innenraum (2) einen Kanal bildet.

3. Küvette nach Anspruch 2, wobei die erste Analysestrecke (7) und die zweite Analysestrecke (8) auf einer Achse zwischen erster Öffnung (6) und zweiter Öffnung (9) dergestalt nebeneinander angeordnet sind, dass sich die erste Analysestrecke (7) zwischen der ersten Öffnung (6) und der zweiten Analysestrecke (8) befindet und die zweite Analysestrecke (8) sich zwischen der ersten Analysestrecke (7) und der zweiten Öffnung (9) befindet.

4. Küvette nach einem der vorangehenden Ansprüche, wobei an der ersten Öffnung (6) ein Anschlussbereich (10) angeordnet ist, sodass eine Pipettenspitze (11) an der Küvette (1) anbringbar ist.

5. Küvette nach einem der vorangehenden Ansprüche, wobei eine der sich gegenüberliegenden Seiten (4, 5) der Küvette (1) in dem Bereich des Analyseabschnitt (3) an dem sich die erste Analysestrecke (7) zwischen den beiden gegenüberliegenden Seiten (4, 5) der Küvette (1) erstreckt, verdickt ist.

6. Küvette nach einem der vorangehenden Ansprüche, wobei die erste Analysestrecke (7) weniger als 0.9 mm lang ist und die zweite Analysestrecke (8) zwischen 0.95 mm und 2 mm lang ist, insbesondere die erste Analysestrecke (7) weniger als 0.5 mm lang ist und die zweite Analysestrecke (8) zwischen 0.9 mm und 1.75 mm lang ist, wobei die erste Analysestrecke (7) besonders bevorzugt weniger als 0.2 mm lang ist und die zweite Analysestrecke (8) besonders bevorzugt zwischen 0.9 mm und 1.5 mm lang ist.

7. Küvette nach einem der vorangehenden Ansprüche, wobei der Analyseabschnitt (3) mindestens an der ersten (4) der sich gegenüberliegenden Seiten (4 und 5) über mindestens ein Messfenster (12) verfügt, und sich mindestens eine der ersten (7) oder zweiten Analysestrecke (8) von dem Messfenster (12) zur zweiten Seite (5) der sich gegenüberliegenden Seiten (4 und 5) der Küvette (1) erstreckt, sodass das Fluid durch das Messfenster (12) entlang der Analysestrecke analysiert werden kann.

8. Küvette nach einem der Ansprüche 1 bis 6, wobei der Analyseabschnitt (3) von einer Wand (13) umgeben ist, und die Wand (13) über mindestens ein Messfenster (12) zum Messen des Fluids im Innenraum (2) verfügt.

9. Küvette nach Anspruch 8, wobei die Wand (13) ein Paar einzelner sich gegenüberstehender Teilwände (14), insbesondere zwei Paare einzelner sich gegenüberstehende Teilwände (14) umfasst.

10. Küvette nach einem der vorangehenden Ansprüche, wobei der Innenraum (2) konisch zuläuft, und der Innenraum (2) bevorzugt entlang des Analyseabschnitt (3) konisch zuläuft.

11. Küvette nach einem der Ansprüche 1-9, wobei der Innenraum (2) gestuft ist, insbesondere entlang des Analyseabschnitt (3) gestuft ist.

12. Verfahren zur Analyse, umfassend die folgenden Schritte:
a) Bereitstellen einer Küvette (1) nach einem der vorangehenden Ansprüche,
b) Befüllen der Küvette (1) über die erste Öffnung (6) mit dem Fluid,
c) Analyse des Fluids im Analyseabschnitt (3) entlang der ersten (7) und / oder der zweiten Analysestrecke (8).

13. Verfahren nach Anspruch 12, wobei die Küvette (1) über eine zweite Öffnung (9) verfügt und nach der Analyse über die zweite Öffnung (9) geleert wird.

14. Pipettiervorrichtung zur Dosierung einer Flüssigkeit mittels eines Fluidstromes, umfassend
eine Küvette (1) nach einem der Ansprüche 1-11,
ein Mittel (20) zum Befüllen der an der Pipettiervorrichtung (100) angebrachten Küvette (1) durch den Fluidstrom, wobei die Küvette (1) mit dem Mittel (20) zum Befüllen und Entleeren strömungsverbindbar ist.

15. Pipettierautomat umfassend eine Pipettiervorrichtung (100) nach Anspruch 14, und eine Bewegungsvorrichtung (21) zur Bewegung der Pipettiervorrichtung (100) sowie einen Analyseapparat zur Durchführung der Analyse des Fluids in der Küvette (1).
